# EUROPÄISCHE PATENTSCHRIFT

(11) **EP 0 831 301 B1**
(45) Veröffentlichungstag und Bekanntmachung des Hinweises auf die Patenterteilung: **17.04.2002**
(21) Anmeldenummer: 97116294.6
(22) Anmeldetag: 18.09.1997
(51) Int. Cl.: G01D 5/244, G01D 3/02

(54) **Schaltungsanordnung und Verfahren zur Erzeugung mehrerer Analogsignale**
Circuit and method for generating multiple analogue signals
Circuit et méthode pour générer plusieurs signaux analogiques

(30) Priorität: 20.09.1996 DE 19638677
(43) Veröffentlichungstag der Anmeldung: 25.03.1998
(73) Patentinhaber: MCS Mobile Control Systems S.A., 1180 Brüssel (BE)
(72) Erfinder: Mehnert, Walter, 85521 Ottobrunn (DE); Theil, Thomas, 82340 Feldafing (DE)
(74) Vertreter: Strasser, Wolfgang, Dipl.-Phys

(56) Entgegenhaltungen:
- FR-A- 2 509 851
- US-A- 4 870 863
- US-A- 5 143 452

## Beschreibung

Die Erfindung betrifft eine Schaltungsanordnung sowie ein Verfahren zur Erzeugung mehrerer Analogsignale, die sich in Abhängigkeit von der Position ändern, die einer von zwei gegeneinander bewegbaren Körpern bezüglich des anderen einnimmt, gemäß den Oberbegriffen der Ansprüche 1 und 13.

Bei der Positionsüberwachung mit Hilfe von Linear- oder Winkelgebern tritt häufig das Problem auf, daß ein und dieselbe Linearverschiebung bzw. Drehbewegung zur Steuerung verschiedener Vorgänge in unterschiedlicher Weise ausgewertet werden muß.

So kann z.B. die momentane Winkelstellung der Drehachse des Gaspedals eines Kraftfahrzeuges gleichzeitig für die Steuerung der Einspritzpumpe, der Drosselklappe und/oder des Zündzeitpunktes von Bedeutung sein, wobei für die einzelnen nachgeordneten Einheiten im allgemeinen ganz verschiedene Positions-Meßwertbereiche erfaßt und das jeweilige analoge Meßsignal einem der betreffenden Einheit zugeordneten Empfänger in einer auf dessen Bedürfnisse abgestimmten, sich von den anderen Analogsignalen stark unterscheidenden Form zugeführt wird.

Nach dem Stand der Technik ist es bekannt, derartige Systeme mit einer der Anzahl der Empfänger entsprechenden Zahl von Positionsgebern, beispielsweise Potentiometern, auszustatten und diese montage- und schaltungstechnisch so zu konditionieren, daß sie jeweils einen individuell zugeordneten Positionsbereich erfassen und bei dessen Durchlaufen einen Spannung abgeben, die sich zwischen einem Minimalwert, der der einen Bereichsgrenze entspricht, und einem Maximalwert, der die andere Bereichsgrenze repräsentiert, ändert.

Diese bekannte Vorgehensweise bringt eine Reihe von Schwierigkeiten mit sich.

So muß z.B. selbst dann, wenn jedem der Empfänger die gleiche Analogspannung zur Darstellung des gleichen Meßbereichs zugeführt werden soll, für jeden Empfänger ein eigenes Potentiometer bzw. ein eigener Sensor vorgesehen werden, um die erforderliche Rückwirkungsfreiheit sicherzustellen.

Wenn unterschiedliche Meßbereiche exakt aufeinander bezogen sein müssen, ist ein großer Aufwand erforderlich, um die Nullstellungen bzw. Nullwerte der Potentiometer entsprechend genau festzulegen bzw. zu erfassen.

Auch kann ein Potentiometer immer nur einen Winkelbereich von weniger als 360° überdecken, so daß bei Anwendungsfällen, in denen größere Winkel messend überwacht werden sollen, zwei äußerst exakt aufeinander abgestimmte und zueinander sehr genau positionierte Potentiometer eingesetzt werden müssen. In der Praxis verbietet sich dies häufig wegen der damit verbundenen hohen Herstellungs- und Montagekosten.

Auch haben kostengünstige Potentiometer im Regelfall lineare Ausgangskennlinien, so daß zusätzliche Elektronikschaltungen erforderlich sind, wenn andere Kennlinienverläufe benötigt werden.

Demgegenüber liegt der Erfindung die Aufgabe zugrunde, eine Schaltungsanordnung bzw. ein Verfahren der eingangs genannten Art zu schaffen, die es ermöglichen, mit geringem Schaltungsaufwand eine praktisch beliebig große Anzahl von von einer zu überwachenden Bewegung abgeleiteten, voneinander unabhängig ausgestalteten Positionssignalen zu erzeugen.

Zur Lösung dieser Aufgabe sieht die Erfindung die in den Ansprüchen 1 bezichungsweise 13 zusammengefaßten Merkmale vor.

Diesen erfindungsgemäßen Maßnahmen liegt die Erkenntnis zugrunde, daß ein und dasselbe Digitalsignal einerseits problemlos einer beliebigen Anzahl von Verarbeitungskanälen rückwirkungsfrei zugeführt und andererseits mit unterschiedlich verdrahteten bzw. angesteuerten Digital/Analog-Wandlern in die verschiedensten Analogsignale transformiert werden kann, um entsprechend unterschiedliche Analogpositionsgeber zu simulieren.

Diese Simulation kann, wie bereits angedeutet, entweder über die Verdrahtung der Digital/Analog-Wandler und ggf. mit Hilfe von nachgeordneten einfachen Elektronikschaltungen oder, vorzugsweise dadurch erfolgen, daß das vom Sensor abgegebene, digitalisierte Meßsignal mit Hilfe einer Rechen- und Steuerschaltung so modifiziert wird, daß nur noch eine Digital/Analog-Wandlung erforderlich ist, um das gewünschte analoge Ausgangssignal zu erhalten. Dieses modifizierte Digitalsignal kann dann im Zeitmultiplexverfahren mehreren zueinander parallelen Digital/Analog-Wandlern zugeführt werden, deren Ausgänge wiederum die unterschiedlichsten Analogsensoren simulieren.

Diese letztgenannte Vorgehensweise bietet den Vorteil, daß an ein und demselben Ausgang in Abhängigkeit von einem der Rechenschaltung vorgegebenen Programm oder von einem von außen her zugeführten Befehlssignal nacheinander unterschiedliche Sensoren simuliert werden können.

Die wesentlichsten Parameter, die dabei frei wählbar veränderlich sind, sind der Meßbereich, die Ausgangssignalbereiche (für Strom oder Spannung), das Zuordnungsvorzeichen zwischen diesen beiden Bereichen, der Kennlinienverlauf usw.

Da die Signale aller simulierten Ausgänge von ein und demselben digitalen Signal abgeleitet werden, sind sie jederzeit exakt aufeinander bezogen und die Feststellung ihres gemeinsamen Nullpunktes ist ohne weiteres möglich.

Findet als einziger Sensor ein induktiver Meßwertgeber Verwendung, wie er beispielsweise aus den deutschen Patentschriften P 41 13 745 bzw. P 41 27 209 bekannt ist, so können beliebig große Winkelbereiche mit wesentlich größerer Genauigkeit und Auflösung erfaßt werden, als dies mit Potentiometern möglich ist.

Daneben kann die erfindugnsgemäße Schaltungsanordnung auch Ausgänge besitzen, an denen das digitale Meßsignal selbst oder von ihm abgeleitete Digitalsignale zur Verfügung stehen.

Es wird also nicht nur die Anzahl der benötigten Sensoren auf einen einzigen reduziert, sondern es entfällt auch der Montageaufwand, mit dem die bisher eingesetzten mehreren Sensoren zueinander positioniert und justiert werden mußten.

Diese und andere Vorteile sowie weitere Ausgestaltungsmöglichkeiten der erfindungsgemäßen Schaltungsanordnung und des zugehörigen Verfahrens ergeben sich aus den Unteransprüchen.

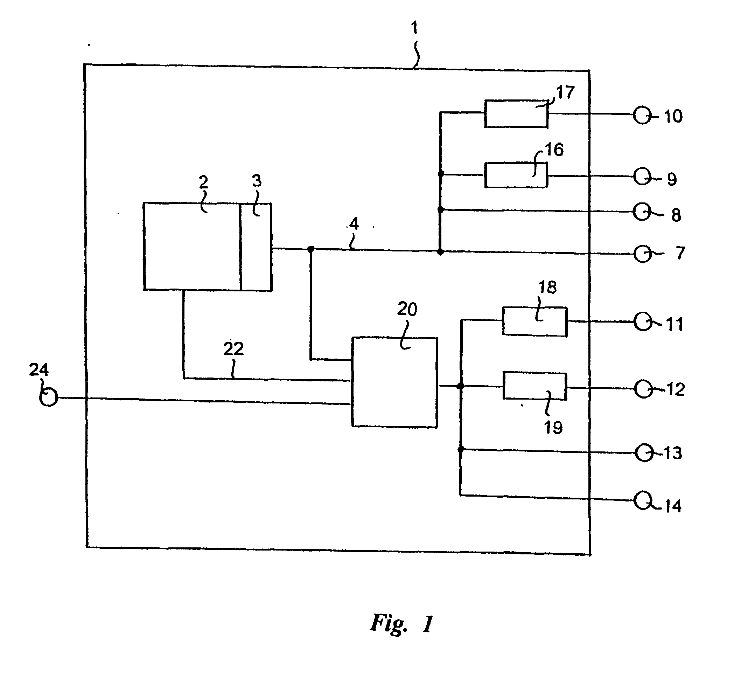

Die Erfindung wird im folgenden an Hand eines Ausführungsbeispiels unter Bezugnahme auf die Zeichnung beschrieben; in dieser zeigt die einzige Figur ein schematisches Prinzip-Schaltbild der erfindungsgemäßen Schaltungsanordnung.

In der Figur ist der Schaltungsanordnung 1 zur Erzeugung mehrerer Analogsignale ein Sensor 2 zugeordnet, bei dem es sich beispielsweise um einen induktiven Positionsgeber, insbesondere einen induktiven Winkelgeber handeln kann.

Diesem Sensor 2 ist eine elektronische Schaltungseinheit 3 nachgeordnet, die das von ihm zunächst erzeugte Analogsignal in digitaler Form aufbereitet. Eine solche Schaltungsanordnung ist beispielsweise der europäischen Offenlegungsschrift 0 582 111 entnehmbar.

Das von dieser Schaltungseinheit 3 auf der Daten-Busleitung 4 abgegebene, den vom Sensor 2 jeweils ermittelten Meßwert in digitaler Form darstellende Signal wird den Ausgängen 7 und 8 der Schaltungsanordnung 1 unmittelbar zugeführt, die jeweils mit einer (nicht dargestellten) Verwenderschaltung verbunden sind, die zum Empfang und weiteren Verarbeitung derartiger digitaler Meßsignale eingerichtet ist.

Demgegenüber sind die Ausgänge 9 bis 12 mit Empfängern bzw. Verwender-Schaltungen verbunden, denen Meßsignale in analoger Form zugeführt werden müssen. Die Ausgänge 13 und 14 bedienen demgegenüber Empfänger, denen zwar ebenfalls digitale Signale zugeführt werden müssen, die aber mit dem am Ausgang der Schaltungseinheit 3 gelieferten Meßsignal nicht identisch, sondern von diesem abgeleitet sind, wie dies im folgenden noch genauer erläutert wird.

Das auf der Leitung 4 erscheinende digitale Meßsignal wird weiterhin zwei Digital/Analog-Wandlern 16, 17 zugeführt, die es nach jeweils einer durch eine feste Verdrahtung vorgegebenen Vorschrift in ein Analogsignal umwandeln, das an den Ausgängen 9 bzw. 10 erscheint.

Mit dem Ausdruck "Vorschrift" wird beispielsweise ein bestimmter Meßwertebereich, ein diesem Meßwertebereich entsprechender Spannungs- bzw. Strombereich usw. verstanden.

Beispielsweise können dann, wenn es sich bei dem Sensor 2 um einen Winkelgeber handelt, am Ausgang 9 Spannungswerte von -3 bis +3 V durchlaufen werden, wenn die Winkelstellung der vom Sensor 2 überwachten Welle sich zwischen 45° und 65° ändert, während am Ausgang 10 eine von +2 bis +10 V variierende Spannung erscheint, wenn ein Winkelbereich von 345° bis 5° bzw. von -15° bis +5° durchlaufen wird.

Diese Zahlenwerte dienen nur als Beispiele und es sei ausdrücklich darauf hingewiesen, daß es auch möglich ist, die Digital/Analog-Wandler so fest zu programmieren, daß ihren analogen Ausgangssignalen beim Durchlaufen gleicher Meßbereiche hinsichtlich der maximalen Amplitude bzw. des Vorzeichens unterschiedliche Spannungswerte oder beim Durchlaufen gleicher bzw. voneinander verschiedener Meßbereiche gleiche Spannungswerte zugeordnet sind. Statt einer Spannung kann durch einen entsprechenden Aufbau der Digital/Analog-Wandler 16, 17 auch ein sich mit der zu überwachenden Position ändernder eingeprägter Strom abgegeben werden.

Es sei ausdrücklich darauf hingewiesen, daß die Zahl der derart an die Leitung 4 anschließbaren Digital/Analog-Wandlereinheiten nicht auf zwei begrenzt ist, sondern nahezu beliebig groß sein kann, um die unterschiedlichsten Ausgangssignale zu erzeugen.

Demgegenüber wird den die Ausgänge 11 und 12 bedienenden Digital/Analog-Wandlern 18, 19 das vom Ausgang der Schaltungseinheit 3 abgegebene digitale Meßsignal nicht unmittelbar, sondern über eine Steuer- und Recheneinheit (Prozessor) 20 zugeführt, die dieses Digitalsignal im Sinne der oben genannten, bei den Digital/Analog-Wandlern 16, 17 durch die feste Verdrahtung vorgegebenen Vorschriften so aufbereitet, daß es von den Wandlern 18, 19 nur noch in analoge Form umgesetzt werden muß.

Entsprechendes gilt auch für die an den Ausgängen 13, 14 abgegebenen Digitalsignale, die vom Prozessor 20 in frei wählbarer Weise aus dem Digitalsignal auf der Leitung 4 beispielsweise so abgeleitet sind, daß am Ausgang 13 immer dann ein einzelner Digitalimpuls erscheint, wenn eine bestimmte, vorgewählte Position durchlaufen wird. Handelt es sich bei dieser Position um eine Winkelstellung, so kann an den Ausgang 13 ein Umdrehungszähler angeschlossen werden. Auch kann das von ihm gelieferte Positionssignal zur Simulation eines Endlagen-Schalters verwendet werden.

Die Rechen- und Steuerschaltung 20 umfaßt an ihrem Ausgang einen (nicht dargestellten) Multiplexer, der die entsprechend aufbereiteten Digitalsignale den nachfolgenden Digital/Analog-Wandlern 18, 19 bzw. den Ausgängen 13, 14 im Zeitmultiplex-Verfahren zuführt. Es können (ebenfalls nicht dargestellte) Pufferschaltungen vorgesehen sein, die den jeweiligen Wert für die Digital/Analog-Wandlerschaltungen 18, 19 bzw. die Ausgänge 13, 14 in den Zeiträumen, in denen sie vom Prozessor 20 nicht unmittelbar angesteuert werden, zwischenspeichern.

Der Prozessor 20 ist über eine Leitung 22 mit dem Sensor 2 bzw. dessen Schaltungseinheit 3 verbunden, so daß er auch die Form des von der Schaltungseinheit 3 abgegebenen Digitalsignals beeinflussen kann. Beispielsweise kann er bewirken, daß auf der Leitung 4 nur die inkrementalen Änderungswerte des Meßsignals, ein in seiner Bitlänge um die niedrigstwertigen Bits verkürztes Meßsignal oder nur die Änderungsrichtung des Signals ausgegeben werden.

Vom Eingangsanschluß 24 her kann der Prozessor 20 so gesteuert werden, daß er die an seinem Ausgang abgegebenen, vom digitalen Meßsignal auf der Leitung 4 abgeleiteten Digitalsignale für die einzelnen nachgeordneten Einheiten bzw. Ausgänge nicht nur gemäß einem fest eingespeicherten Programm sondern in Abhängigkeit von einem über den Eingang 24 zugeführten Steuerungssignal variiert.

Durch die beschriebene Anordnung ist es somit möglich, mit Hilfe des von einem einzigen Positionsgeber erfaßten, digitalisierten Meßsignals eine Vielzahl von Digital- und Analogkanälen zu bedienen, denen dieses Meßsignal entweder direkt oder in den unterschiedlichsten analogen Varianten zugeführt werden kann. Die Schaltungsanordnung ermöglicht somit eine rechnerische Simulation verschiedenster Arten von Meßwertgebern, die jeweils in optimaler Weise an die Erfordernisse des nachgeschalteten Empfängers angepaßt sind. Da alle Signale von einem einzigen Sensor stammen, ist eine bei der Montage erfolgende gegenseitige Justierung nicht erforderlich.

Anstelle eines induktiven Stellungsgebers 2 kann prinzipiell auch ein Potentiometer oder jede andere Art von Stellungsgeber verwendet werden, der ein analoges Meßsignal liefert, das in der Schaltungsanordnung 3 zunächst digitalisiert wird. Als Drehgeber eingesetzte Potentiometer haben allerdings den Nachteil, daß sie nur einen Winkelbereich kleiner 360° überdecken können. Soll ein größerer Winkelbereich bzw. eine beliebige Anzahl von Umdrehungen messend erfaßt und verfolgt werden, sind die erwähnten induktiven Positionsgeber vorzuziehen.

Es versteht sich, daß eine erfindungsgemäße Schaltungsanordnugn auch nur fest verdrahtete Digital/Analog-Wandler oder nur über einen Prozessor 20 gesteuerte Wandler umfassen kann.

## Patentansprüche

1. Schaltungsanordnung zur Erzeugung mehrerer Analogsignale, die sich in Abhängigkeit von der Position, die einer von zwei gegeneinander bewegbaren Körpern bezüglich des anderen einnimmt, verändern und zur Steuerung nachgeordneter Einheiten voneinander getrennten Empfängern zuführbar sind,
**dadurch gekennzeichnet, daß** sie folgende Bestandteile umfaßt:
- einen einzigen Sensor (2) für die messende Erfassung der zu überwachenden Position,
- eine Schaltungsanordnung (3) mit einem den mit Hilfe des Sensors (2) ermittelten Meßwert als Digitalsignal abgebenden Ausgang (4) und
- eine Digital/Analog-Wandleranordnung (16, 17, 18, 19), die für jeden der Empfänger ein aus dem Digitalsignal abgeleitetes, entsprechend aufbereitetes Analogsignal abgibt, wobei zumindest zwei dieser Analogsignale unterschiedlichen Positions-Meßbereichen zugeordnet sind.

2. Schaltungsanordnung nach Anspruch 1, **dadurch gekennzeichnet, daß** die Digital/Analog-Wandleranordnung (16, 17, 18, 19) aus dem Digitalsignal abgeleitete Analogsignale abgibt, die dann, wenn der ihnen zugeordnete Positions-Meßbereich durchlaufen wird, unterschiedliche Spannungsbereiche durchlaufen.

3. Schaltungsanordnung nach einem der Ansprüche 1 oder 2, **dadurch gekennzeichnet, daß** die Digital/Analog-Wandleranordnung (16, 17, 18, 19) aus dem Digitalsignal abgeleitete Analogsignale abgibt, von denen zumindest eines innerhalb des ihm zugeordneten Positions-Meßbereiches den Meßwert in Form eines eingeprägten Stromes darstellt.

4. Schaltungsanordnung nach Anspruch 2 oder 3, **dadurch gekennzeichnet, daß** die Digital/Analog-Wandleranordnung (16, 17, 18, 19) aus dem Digitalsignal abgeleitete Analogsignale abgibt, die einen unterschiedlichen Kennlinienverlauf aufweisen.

5. Schaltungsanordnung nach einem der vorhergehenden Ansprüche, **dadurch gekennzeichnet, daß** sie weiterhin wenigstens einen ein digitales Meßsignal an einen Empfänger abgebenden Ausgang (7, 8, 13, 14) aufweist.

6. Schaltungsanordnung nach einem der vorhergehenden Ansprüche, **dadurch gekennzeichnet, daß** sie einen Multiplexer umfaßt, der wenigstens zwei der Analogsignale zeitlich nacheinander an ein und dem selben Analogausgang der Schaltungsanordnung (1) zur Verfügung stellt.

7. Schaltungsanordnung nach einem der vorhergehenden Ansprüche, **dadurch gekennzeichnet, daß** sie wenigstens zwei Analogausgänge (9, 10, 11, 12) aufweist, an denen wenigstens zwei der Analogsignale gleichzeitig zur Verfügung stehen.

8. Schaltungsanordnung nach einem der vorhergehenden Ansprüche, **dadurch gekennzeichnet, daß** der Sensor (2) ein induktiver Winkelgeber ist.

9. Schaltungsanordnung nach einem der vorhergehenden Ansprüche, **dadurch gekennzeichnet, daß** der Sensor (2) ein induktiver Lineargeber ist.

10. Schaltungsanordnung nach einem der vorhergehenden Ansprüche, **dadurch gekennzeichnet, daß** die Digital/Analog-Wandleranordnung (16, 17) das Analogsignal für wenigstens einen der Empfänger aus dem Digitalsignal nach einer durch eine feste Verdrahtung vorgegebenen Vorschrift ableitet.

11. Schaltungsanordnung nach einem der vorhergehenden Ansprüche, **dadurch gekennzeichnet, daß** sie eine Steuer- und Recheneinheit (20) umfaßt, die der Digital/Analog-Wandleranordnung (18, 19) aus dem Digitalsignal abgeleitete, für die Erzeugung der gewünschten Analogsignale modifizierte Digitalsignale in zeitlich veränderbarer Weise zuführt.

12. Schaltungsanordnung nach einem der vorhergehenden Ansprüche, **dadurch gekennzeichnet, daß** die Steuer- und Recheneinheit (20) einen Steuereingang (24) besitzt, über den die modifizierten Digitalsignale, die die Steuer- und Recheneinheit (20) der Digital/Analog-Wandleranordnung (18, 19) zuführt, von außen her veränderbar sind.

13. Verfahren zur Erzeugung mehrerer Analogsignale, die sich in Abhängigkeit von der Position, die einer von zwei gegeneinander bewegbaren Körpern bezüglich des anderen einnimmt, verändern,
**dadurch gekennzeichnet,**
- **daß** die zu überwachende Position mit Hilfe eines einzigen Sensors (2) messend erfaßt wird,
- **daß** ein den mit Hilfe des Sensors ermittelten Meßwert darstellendes Digitalsignal erzeugt wird, und
- **daß** aus dem Digitalsignal für jeden der Empfänger ein entsprechend aufbereitetes Analogsignal abgeleitet wird, wobei wenigstens zweien der Analogsignale unterschiedliche Positions-Meßbereiche zugeordnet werden.

14. Verfahren nach Anspruch 13, **dadurch gekennzeichnet, daß** aus dem Digitalsignal abgeleitete Analogsignale dann, wenn der ihnen zugeordnete Positions-Meßbereich durchlaufen wird, unterschiedliche Spannungsbereiche durchlaufen.

15. Verfahren nach Anspruch 13, **dadurch gekennzeichnet, daß** zumindest eines der aus dem Digitalsignal abgeleiteten Analogsignale den Meßwert in Form eines eingeprägten Stromes darstellt.

16. Verfahren nach Anspruch 14 oder 15, **dadurch gekennzeichnet, daß** die aus dem Digitalsignal abgeleiteten Analogsignale unterschiedliche Kennlinien aufweisen.

17. Verfahren nach einem der Ansprüche 13 bis 16, **dadurch gekennzeichnet, daß** an wenigstens einen Empfänger ein digitales Meßsignal abgegeben wird.

18. Verfahren nach einem der Ansprüche 13 bis 17, **dadurch gekennzeichnet, daß** wenigstens zwei der Analogsignale zeitlich nacheinander an ein und dem selben Analogausgang der Schaltungsanordnung zur Verfügung gestellt werden.

19. Verfahren nach einem der Ansprüche 13 bis 17, **dadurch gekennzeichnet, daß** wenigstens zwei der Analogsignale gleichzeitig an zwei getrennten Analogausgängen zur Verfügung gestellt werden.

20. Verfahren nach einem der Ansprüche 15 bis 19, **dadurch gekennzeichnet, daß** die Digital/Analog-Wandleranordnung das Analogsignal für wenigstens einen der Empfänger aus dem Digitalsignal nach einer durch eine feste Verdrahtung vorgegebenen Vorschrift ableitet.

21. Verfahren nach einem der Ansprüche 13 bis 20, **dadurch gekennzeichnet, daß** der Digital/Analog-Wandleranordnung zur Erzeugung des Analogsignals für wenigstens einen der Empfänger ein aus dem Digitalsignal abgeleitetes, modifiziertes Digitalsignal zugeführt wird.

22. Verfahren nach einem der Ansprüche 13 bis 21, **dadurch gekennzeichnet, daß** der Digital/Analog-Wandleranordnung mehrere aus dem Digitalsignal abgeleitete, modifizierte Digital-Signale im Zeitmultiplexverfahren zugeführt werden.

23. Verfahren nach Anspruch 22, **dadurch gekennzeichnet, daß** die Abfolge der der Digital/Analog-Wandleranordnung zur Erzeugung mehrerer verschiedener Analogsignale zugeführten, modifizierten Digital-Signale von außen her steuerbar ist.

24. Verfahren nach Anspruch 17, **dadurch gekennzeichnet, daß** das Digitalsignal für wenigstens einen der Empfänger Einzelimpulse umfaßt, von denen jeder das Erreichen beziehungsweise Durchlaufen wenigstens einer vorbestimmten Position kennzeichnet.

## Claims

1. A circuit arrangement for providing a plurality of analog signals which are variable in dependence on the position adapted by one of two mutually movable bodies with respect to the other one of said two bodies, said analog signals being adapted to be fed to receivers that are separate from each other for the control of subsequent units,
**characterised in that** said circuit arrangement comprises:
- a single sensor (2) for measuringly detecting said position to be monitored,
- a circuit means (3) having an output (4) for outputting in the form of a digital signal the measurement value obtained by means of said sensor (2) and
- a digital/analog converter means (16, 17, 18, 19) which outputs for each of said receivers a suitably process analog signal derived from said digital signal, wherein at least two of said analog signals are associated with different position measurement arranges.

2. A circuit arrangement according to claim 1, **characterised in that** the digital/analog converter means (16, 17, 18, 19) outputs analog signals which are derived from the digital signal and which pass through different voltage ranges when the position measurement range associated with said analog signals is transited.

3. A circuit arrangement according to claims 1 or 2, **characterised in that** the digital/analog converter means (16, 17, 18, 19) outputs analog signals which are derived from the digital signal and of which at least one, within said position measurement range associated therewith, represents said measurement value in the form of an impressed current.

4. A circuit arrangement according to claims 2 or 3, **characterised in that** the digital/analog converter means (16, 17, 18, 19) outputs analog signals which are derived from the digital signal and which have different characteristics.

5. A circuit arrangement according to any preceding claim, **characterised in that** it further includes at least one output (7, 8, 13, 14) for outputting a digital measurement signal to a receiver.

6. A circuit arrangement according to any preceding claim, **characterised in that** it includes a multiplexer making available at least two of said analog signals in succession in respect of time at one and the same analog output of the circuit arrangement (1).

7. A circuit arrangement according to any preceding claim, **characterised in that** it includes at least two analog outputs (9, 10, 11, 12) at which at least two of said analog signals are available at the same time.

8. A circuit arrangement according to any preceding claim, **characterised in that** the sensor (2) is an inductive angle sensor.

9. A circuit arrangement according to any preceding claim, **characterised in that** the sensor (2) is an inductive linear sensor.

10. A circuit arrangement according to any preceding claim, **characterised in that** the digital/analog converter means (16, 17) derives the analog signal or at least one of the receivers from the digital signal in accordance with a specification which is predetermined by a fixed wiring configuration.

11. A circuit arrangement according to any preceding claim, **characterised in that** a control and computing unit (20) which feeds variably in respect of time the digital/analog converter means (18, 19) with digital signals which are derived from the digital signal and which are modified for the production of the desired analog signals.

12. A circuit arrangement according to any preceding claim, **characterised in that** the control and computing unit (20) comprises a control input (24) by way of which the modified digital signals fed to the digital/analog converter means (18, 19) by the control and computing unit (20) are variable from the exterior.

13. A method of producing a plurality of analog signals which are variable in dependence on the position adopted by one of two mutually movable bodies with respect to the other one of said two bodies,
**characterised in that**,
- said position to be monitored is measuringly detected by means of a single sensor (2),
- a digital signal representing the measurement value obtained by means of the sensor (2) is produced, and
- for each of the receivers a suitable processed analog signal is derived from the digital signal, wherein different position measurement ranges are associated with at least two of said analog signals.

14. A method according to claim 13, **characterised in that** analog signals derived from the digital signal pass through different voltage ranges when the position measurement range associated with said analog signals is transited.

15. A method according to claim 13, **characterised in that** at least one of the analog signals derived from the digital signal represents the measurement value in the form of an impressed current.

16. A method according to claims 14 or 15, **characterised in that** the analog signals derived from the digital signal have different characteristics.

17. A method according to any of claims 13 to 16, **characterised in that** said digital measuring signal is outputted to at least one receiver.

18. A method according to any of claims 13 to 17, **characterised in that** at least two of said analog signals are made available in succession in respect of time at one and the same analog output.

19. A method according to any of claims 13 to 17, **characterised in that** at least two of said analog signals are simultaneously made available at two separate analog outputs.

20. A method according to any of claims 15 to 19, **characterised in that** the digital/analog converter means derives the analog signal for at least one of said receivers from the digital signal in accordance with a specification which is predetermined by a fixed wiring configuration.

21. A method according to any of claims 13 to 20, **characterised in that** a modified digital signal derived from said digital signal is fed to said digital/analog converter means for producing the analog signal for at least one of said receivers.

22. A method according to any of claims 13 to 21, **characterised in that** a plurality of modified digital signals derived from said digital signal are fed in a time division multiplex process to said digital/analog converter means.

23. A method according to claim 22, **characterised in that** the sequence of said modified digital signals which are fed to said digital/analog converter means for generating a plurality of different analog signals is controllable from the exterior.

24. A method according to claim 17, **characterised in that** the digital signal for at least of said receivers includes individual pulses each of which characterises the attainment of or the passage through at least one predetermined position.

## Revendications

1. Circuit pour produire plusieurs signaux analogiques qui varient en fonction de la position qu'un parmi deux corps déplaçables mutuellement prend par rapport à l'autre et qui peuvent être envoyés à des récepteurs séparés pour commander des unités montées après, **caractérisé en ce que** le circuit comprend les composants constitutifs suivants :
- un capteur unique (2) pour le prélèvement de la mesure de la position à surveiller,
- un circuit (3) comprenant une sortie (4) délivrant la valeur de mesure en tant que signal numérique obtenu à l'aide du capteur (2), et
- un convertisseur numérique/analogique (16, 17, 18, 19), qui pour chacun des récepteurs délivre un signal analogique dérivé du signal numérique et préparé de manière correspondante, des domaines de mesures de position différents étant associés à au moins deux de ces signaux analogiques.

2. Circuit selon la revendication 1, **caractérisé en ce que** le convertisseur numérique/analogique (16, 17, 18, 19) délivre des signaux analogiques dérivés du signal numérique qui parcourent alors des domaines de tensions différentes lorsque le domaine de mesure de position qui lui est associé est parcouru.

3. Circuit selon l'une des revendications 1 ou 2, **caractérisé en ce que** le convertisseur numérique/analogique (16, 17, 18, 19) délivre des signaux analogiques dérivés du signal numérique dont au moins un représente la valeur de mesure sous la forme d'un courant appliqué à l'intérieur du domaine de mesure de position qui lui est associé.

4. Circuit selon la revendication 2 ou 3, **caractérisé en ce que** le convertisseur numérique/analogique (16, 17, 18, 19) délivre des signaux analogiques dérivés du signal numérique, les signaux analogiques présentant des courbes caractéristiques différentes.

5. Circuit selon l'une des revendications précédentes, **caractérisé en ce qu'**il comprend en outre une sortie (7, 8, 13, 14) délivrant un signal de mesure numérique à un récepteur.

6. Circuit selon l'une des revendications précédentes, **caractérisé en ce qu'**il comprend un multiplexeur, qui délivre au moins deux des signaux analogiques l'un après l'autre dans le temps à une seule et même sortie analogique du circuit (1).

7. Circuit selon l'une des revendications précédentes, **caractérisé en ce qu'**il comprend au moins deux sorties analogiques (9, 10, 11, 12) auxquelles au moins deux des signaux analogiques sont simultanément délivrés.

8. Circuit selon l'une des revendications précédentes, **caractérisé en ce que** capteur (2) est un capteur angulaire inductif.

9. Circuit selon l'une des revendications précédentes, **caractérisé en ce que** le capteur (2) est un capteur linéaire inductif.

10. Circuit selon l'une des revendications précédentes, **caractérisé en ce que** le convertisseur numérique/analogique (16, 17) délivre le signal analogique pour au moins un des récepteurs à partir du signal numérique selon une règle prédéterminée par un câblage fixe.

11. Circuit selon l'une des revendications précédentes, **caractérisé en ce qu'**il comprend une unité de commande et de calcul (20), qui alimente au convertisseur numérique/analogique (18, 19) des signaux numériques de manière variable dans le temps, lesdits signaux numériques étant dérivés du signal numérique et modifiés pour obtenir les signaux analogiques souhaités.

12. Circuit selon l'une des revendications précédentes, **caractérisé en ce que** l'unité de commande et de calcul (20) comprend une entrée de commande (24) à travers laquelle les signaux numériques modifiés, que l'unité de commande et de calcul (20) a délivré au convertisseur numérique/analogique (18, 19), peuvent être modifiés de l'extérieur.

13. Procédé pour produire plusieurs signaux analogiques, qui varient en fonction de la position qu'un parmi deux corps déplaçables mutuellement prend par rapport à l'autre,
**caractérisé en ce que**,
- la position à surveiller est mesurée à l'aide d'un seul capteur (2),
- un signal numérique représentant la valeur de mesure obtenue à l'aide du capteur est produit, et
- un signal analogique préparé de manière correspondante est dérivé à partir du signal numérique pour chacun des récepteurs, des domaines de mesures de position différents étant associés à au moins deux des signaux analogiques.

14. Procédé selon la revendication 13, **caractérisé en ce que** des signaux analogiques dérivés du signal numérique parcourent des domaines de tension différents lorsque le domaine de mesure de position qui lui est associé est parcouru.

15. Procédé selon la revendication 13, **caractérisé en ce que** au moins un des signaux analogiques dérivés à partir du signal numérique représente la valeur de mesure sous la forme d'un courant appliqué.

16. Procédé selon la revendication 14 ou 15, **caractérisé en ce que** les signaux analogiques dérivés du signal numérique présentent des courbes caractéristiques différentes.

17. Procédé selon l'une des revendications 13 à 16, **caractérisé en ce qu'**un signal de mesure numérique est délivré à au moins un récepteur.

18. Procédé selon l'une des revendications 13 à 17, **caractérisé en ce qu'**au moins deux des signaux analogiques sont délivrés l'un après l'autre dans le temps à une seule et même sortie analogique du circuit.

19. Procédé selon l'une des revendications 13 à 17, **caractérisé en ce qu'**au moins deux des signaux analogiques sont délivrés simultanément à deux sorties analogiques séparées.

20. Procédé selon l'une des revendications 15 à 19, **caractérisé en ce que** le convertisseur numérique/analogique déduit le signal analogique pour au moins un récepteur à partir du signal numérique selon une règle prédéterminée par un câblage fixe.

21. Procédé selon l'une des revendications 13 à 20, **caractérisé en ce que** un signal numérique modifié dérivé du signal numérique est délivré au convertisseur numérique/analogique pour obtenir le signal analogique pour au moins un des récepteurs.

22. Procédé selon l'une des revendications 13 à 21, **caractérisé en ce que** plusieurs signaux numériques modifiés dérivés du signal numérique sont délivrés au convertisseur numérique/analogique par multiplexage dans le temps.

23. Procédé selon la revendication 22, caractérisé la séquence des signaux numériques modifiés délivrés au convertisseur numérique/analogique pour l'obtention de plusieurs signaux analogiques différents peut être commandée de l'extérieur.

24. Procédé selon la revendication 17, **caractérisé en ce que** le signal numérique pour au moins un des récepteurs comprend des impulsions individuelles dont chacune caractérise l'arrivée respectivement le passage à au moins une position prédéterminée.
